# EUROPÄISCHE PATENTANMELDUNG

(11) **EP 3 725 712 A1**
(43) Veröffentlichungstag der Anmeldung: **21.10.2020**
(21) Anmeldenummer: 20168936.1
(22) Anmeldetag: 09.04.2020
(51) Int. Cl.: B65G 59/10

(54) **ENTSTAPLER**

(30) Priorität: 16.04.2019 DE 102019205472
(71) Anmelder: MULTIVAC Sepp Haggenmüller SE & Co. KG, 87787 Wolfertschwenden (DE)
(72) Erfinder: OSTERRIEDER, Franz, 87730 Bad Grönenbach (DE); REUBER, Daniel, 87437 Kempten (DE); DOLP, Benjamin, 87776 Attenhausen (DE); FICKLER, Bernhard, 87749 Hawangen (DE)
(74) Vertreter: Grünecker Patent- und Rechtsanwälte PartG mbB

(57) **Zusammenfassung**

Verfahren zum Betrieb eines Entstaplers (1), um Trays (4) mittels wenigstens zwei Entstaplerschrauben (3) auf eine Transportvorrichtung (2) einzeln abzustapeln, wobei sich der Tray (4) nach dem Vereinzeln durch die Entstaplerschrauben (3) sowohl auf der Transporteinrichtung (2) als auch in einer Kippschutzvorrichtung 8), die unterhalb der Entstaplerschrauben (3) und oberhalb der Transportvorrichtung (2) angeordnet ist, befindet, wobei die Kippschutzvorrichtung (8) ein Kippen und/oder Taumeln des Trays (4) nach dem Auftreffen auf der Transportvorrichtung (2) begrenzt.

## Beschreibung

Die Erfindung bezieht sich auf Verfahren zum Betrieb eines Entstaplers für Trays gemäß Anspruch 1, sowie auf einen Entstapler gemäß Anspruch 2.

Beispielsweise sind aus der DE 202014008161 U1 und EP 2186760 A1 gattungsgemäße Entstapler bekannt, bei denen mittels Entstaplerschrauben einzelne Trays von einem Stapel nach unten vereinzelt werden. So werden nach und nach einzelne Trays auf eine Transportvorrichtung abgeworfen bzw. fallengelassen und von einer Transportvorrichtung wegtransportiert, um Platz für einen nächsten abzustapelnden Tray zu machen. Dabei wird der Tray an seinem Trayrand mittels der Entstaplerschrauben bis an deren unteres Ende geführt. Am unteren Ende der Entstaplerschrauben wird die Schale freigegeben und fällt danach frei auf die Transportvorrichtung. Beim Aufprall kommt es gelegentlich in Abhängigkeit von der Fallhöhe, dem Traygewicht und/oder der Gestaltung der Traybodenfläche zu einem Taumeln oder im schlimmsten Fall zu einem Umkippen des Trays und damit zu einer Störung. Um das Austaumeln zu ermöglichen, kann die Vorschubbewegung zum Transport des Trays nur verzögert erfolgen, nachdem der Tray sicher auf der Transportvorrichtung steht. Dies führt zu einer Leistungsreduzierung des Entstaplers.

Aufgabe der Erfindung ist es, einen verbesserten Entstapler zur Verfügung zu stellen, der die Nachteile aus dem Stand der Technik nicht mehr aufweist oder zumindest diese mindert.

Diese Aufgabe wird gelöst durch ein Verfahren mit den Merkmalen des Anspruchs 1 bzw. durch einen Entstapler und den Merkmalen des Anspruchs 2. Vorteilhafte Weiterbildungen der Erfindung sind in den Unteransprüchen angegeben.

Die Erfindung bezieht sich auf ein Verfahren zum Betrieb eines Entstaplers, um Trays mittels wenigstens zweier Entstaplerschrauben auf eine Transportvorrichtung einzeln abzustapeln, wobei sich der Tray nach dem Vereinzeln durch die Entstaplerschrauben sowohl auf der Transporteinrichtung als auch in einer Kippschutzvorrichtung, die unterhalb der Entstaplerschrauben und oberhalb der Transportvorrichtung angeordnet ist, befindet, wobei die Kippschutzvorrichtung ein Kippen und/oder ein Taumeln des Trays nach dem Auftreffen auf der Transportvorrichtung begrenzt. Dies bringt den Vorteil mit sich, dass der Tray nicht umkippen kann und eine Taumelbewegung begrenzt wird, wodurch der Tray schneller zum sicheren Stehen kommt. So kann die Leistung des Entstaplers auch bei ungünstigen Formen und Abmessungen der Trays stark gesteigert werden.

Erfindungsgemäß umfasst der Entstapler für Trays wenigstens zwei Entstaplerschrauben und eine Transportvorrichtung, wobei die Transportvorrichtung eine Mitnehmerkette oder wenigstens ein Transportband aufweist. Die Erfindung zeichnet sich dadurch aus, dass der Entstapler eine Kippschutzvorrichtung für Trays umfasst, die unterhalb der Entstaplerschrauben und oberhalb der Transportvorrichtung angeordnet ist und derart gestaltet ist, dass die Kippschutzvorrichtung an zwei oder drei Seiten einen Kippschutz aufweist, wobei in Förderrichtung der Transportvorrichtung kein Kippschutz vorgesehen ist. Die Kippschutzvorrichtung verhindert ein Kippen des Trays und begrenzt die Taumelbewegung des Trays, wodurch der Tray schneller zum sicheren Stehen kommt. So kann die Leistung des Entstaplers auch bei ungünstigen Formen und Abmessungen der Trays stark gesteigert werden.

In einer bevorzugten Ausführung ist die Kippschutzvorrichtung höhenverstellbar, um diese an verschieden hohe Trays anpassen zu können.

Vorteilhafterweise ist die Kippschutzvorrichtung mit ihrer Oberseite zwischen 0,5 mm und 3 mm, vorzugsweise zwischen 1 mm und 2 mm, unterhalb eines Trayrands eines auf der Transportvorrichtung befindlichen Trays angeordnet, um den Tray an seinem Trayrand aufzufangen und am Umkippen zu hindern.

Die Kippschutzvorrichtung weist vorzugsweise zwei einander gegenüberliegende Anlagekonturen auf, um ein in Transportrichtung gesehen seitliches Taumeln und/oder Kippen zu verhindern bzw. zu begrenzen. Gleichzeitig wird ein ungehinderter reibungsloser Weitertransport nach Erreichen eines weitgehend sicheren Stehens des Trays auf der Transportvorrichtung ermöglicht.

Die beiden einander gegenüberliegenden Anlagekonturen weisen vorzugsweise jeweils mindestens einen parallel zu einer Förderrichtung der Transportvorrichtung ausgerichteten Abschnitt auf, was den Transport der Trays aus der Kippschutzvorrichtung heraus erleichtert.

Vorzugsweise weist die Kippschutzvorrichtung eine quer zur Förderrichtung der Transportvorrichtung ausgerichtete Anlagekontur auf, um ein Taumeln und/oder Kippen entgegen der Transportrichtung zu verhindern bzw. zu begrenzen.

In einer vorteilhaften Ausführung ist die Kippschutzvorrichtung als Blechkonstruktion ausgeführt, welches eine kostengünstige Konstruktion ermöglicht.

Vorzugsweise ist die Kippschutzvorrichtung einteilig ausgeführt, welches eine kostengünstige Konstruktion darstellt.

Bevorzugt ist die Kippschutzvorrichtung wenigstens teilweise U-förmig ausgebildet, um sich beispielsweise bei rundgeformten Trays bzw. Bechern deren Form möglichst kongruent anzupassen.

Unter Kippen ist eine Neigung des Trays gegenüber einer vertikalen Achse zu verstehen. Das Taumeln ist eine wenigstens teilweise rotierende Bewegung des Trays um eine vertikale Achse.

Im Folgenden soll die Erfindung anhand von einem Ausführungsbeispiel unter Bezugnahme auf die Figuren näher erläutert werden. Dabei zeigt
Fig. 1 eine Ansicht eines erfindungsgemäßen Entstaplers,
Fig. 2 eine Seitenansicht einer Kippschutzvorrichtung mit einem stillstehenden Tray und
Fig. 3 eine Seitenansicht einer Kippschutzvorrichtung mit einem gekippten Tray.

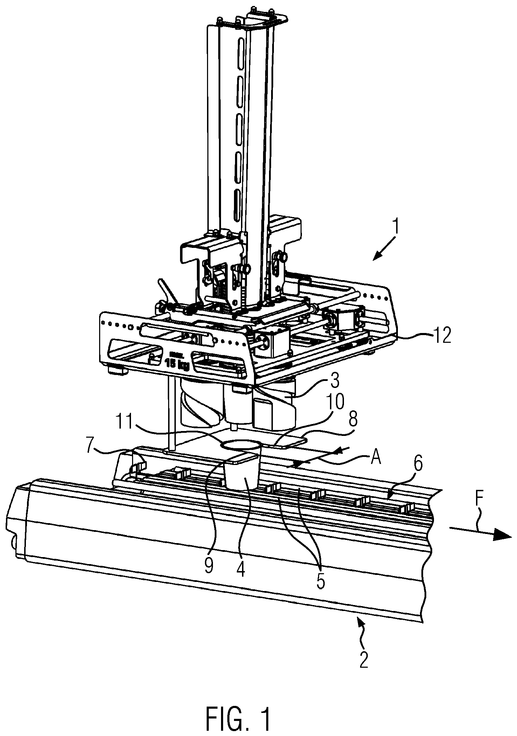

Figur 1 zeigt einen Entstapler 1, der mittels einer nicht näher dargestellten Vorrichtung oberhalb einer Transporteinrichtung 2 angeordnet ist. Der Entstapler 1 umfasst zwei Entstaplerschrauben 3, um Trays 4 einzeln nach unten auf die Transportvorrichtung 2 zu übergeben. Die Transportvorrichtung 2 weist Auflageschienen 5 auf und die abgestapelten Trays 4 werden mittels einer Mitnehmerkette 6 mit einer Vielzahl von Mitnehmern 7 in einer Förderrichtung F vorzugsweise intermittierend zu einer nachfolgenden Arbeitsstation weitertransportiert. Alternativ ist ein Transportband anstatt der Mitnehmerkette 6 und der Auflageschienen 5 denkbar. Der Entstapler 1 weist eine unterhalb der Entstaplerschrauben 3 befestigte Kippschutzvorrichtung 8 auf, um ein Kippen bzw. ein Taumeln des Trays 4 zu verhindern oder zumindest abzumindern, nachdem der Tray 4 auf die Auflageschienen 5 der Transportvorrichtung 2 aufgetroffen ist.

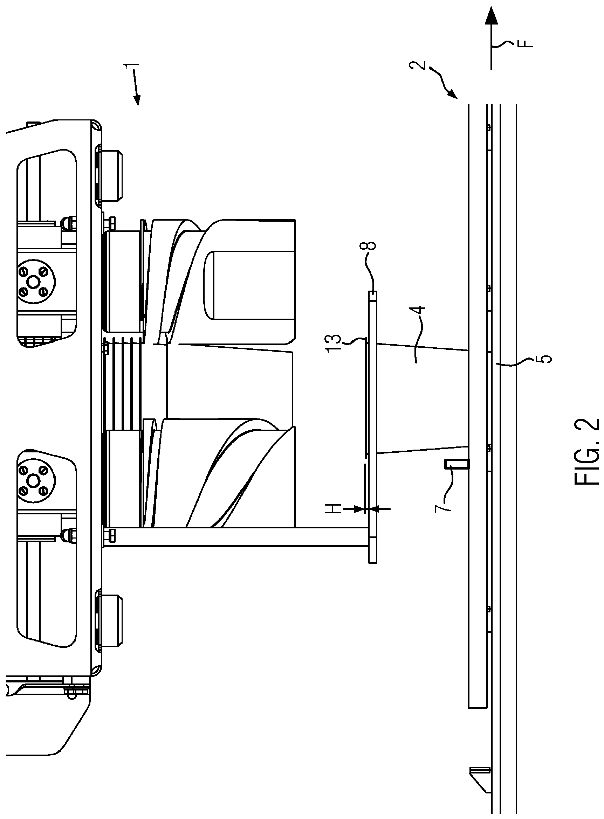

Die Kippschutzvorrichtung 8 weist eine erste und eine zweite parallel zur Förderrichtung F ausgerichtete Anlagekontur 9, 10 auf, sowie eine dritte quer zur Förderrichtung F ausgerichtete Anlagekontur 11. In der dargestellten Ausführungsform der Kippschutzvorrichtung 8 ist diese als einteilige und U-förmige Blechkonstruktion ausgeführt und sie ist mittels zweier optional auch höhenverstellbaren Halteelemente an einem Gestell 12 des Entstaplers 1 befestigt. Die erste und zweite Anlagekontur 9, 10 bzw. deren Innenseiten weisen im Bereich des Trays 4 einen horizontalen Abstand A zueinander auf, wobei dieser Abstand A geringer ist als das entsprechende Außenmaß eines Trayrands 13 und gleichzeitig einen größeren Abstand A als das Außenmaß der Trays 4 zwischen den Anlagekonturen 9, 10. Dies verhindert ein Kippen des Trays 4 in alle Richtungen, da der Trayrand 13 (siehe Figur 2) beim Kippen an den Anlagekonturen 9, 10, 11 anliegt und am weiteren Kippen gehindert wird. Anschließend kippt der Tray 4 zurück und kommt sehr schnell zum Stillstand und damit zum sicheren Stehen auf der Transportvorrichtung 2.

Figur 2 zeigt eine Seitenansicht der Kippschutzvorrichtung 8, wobei der abgestapelte Tray 4 bereits in Ruhe auf den Auflageschienen 5 aufliegt und vom Mitnehmer 7 nach rechts in Förderrichtung F weitertransportiert werden kann, um Platz für den nächsten abzustapelnden Tray 4 zu machen. In dieser Seitenansicht ist dargestellt, dass die Kippschutzvorrichtung 8 in einer vertikalen Höhe H unterhalb des Trayrands 13 angeordnet ist. Diese Höhe H ist vorzugsweise gering, beispielsweise 1 mm bis 2 mm, um einerseits die Kipp- bzw. Taumelbewegung möglichst gering zu halten sowie andererseits keine Reibung durch Berührung des Trayrands 13 mit den Anlagekonturen 9, 10 für den nachfolgenden Weitertransport zu haben.

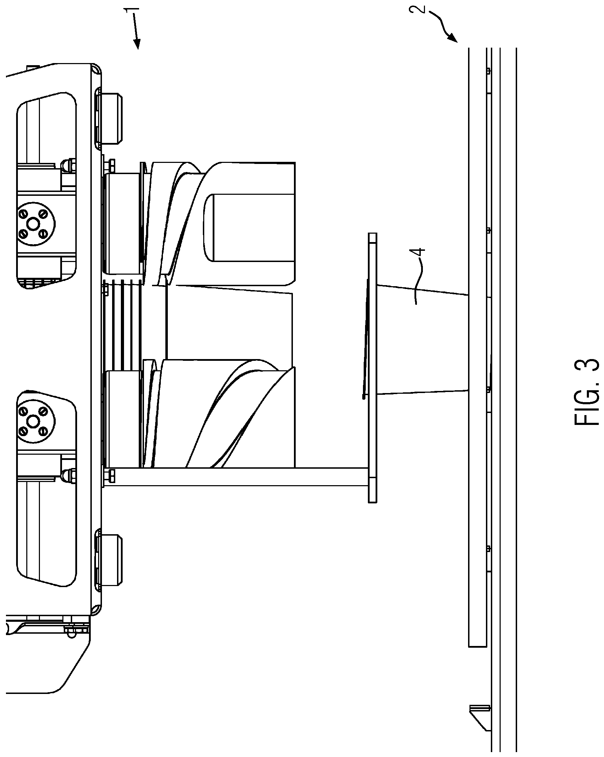

Figur 3 zeigt die Seitenansicht wie Figur 2 mit einem Tray 4 in gekippter Stellung. So ist der positive technische Effekt der Kippbegrenzung des Trays 4 über den Kontakt zwischen dem Trayrand 13 und den Anlagekonturen 9, 10 gut zu erkennen.

## Patentansprüche

1. Verfahren zum Betrieb eines Entstaplers (1), um Trays (4) mittels wenigstens zwei Entstaplerschrauben (3) auf eine Transportvorrichtung (2) einzeln abzustapeln, wobei sich der Tray (4) nach dem Vereinzeln durch die Entstaplerschrauben (3) sowohl auf der Transporteinrichtung (2) als auch in einer Kippschutzvorrichtung (8), die unterhalb der Entstaplerschrauben (3) und oberhalb der Transportvorrichtung (2) angeordnet ist, befindet, wobei die Kippschutzvorrichtung (8) ein Kippen und/oder Taumeln des Trays (4) nach dem Auftreffen des Trays (4) auf der Transportvorrichtung (2) begrenzt.

2. Entstapler (1) für Trays, umfassend wenigstens zwei Entstaplerschrauben (3) und eine Transportvorrichtung (2), wobei die Transportvorrichtung (2) eine Mitnehmerkette (6) oder wenigstens ein Transportband aufweist, **dadurch gekennzeichnet, dass** der Entstapler (1) eine Kippschutzvorrichtung (8) für Trays (4) umfasst, die unterhalb der Entstaplerschrauben (3) und oberhalb der Transportvorrichtung (2) angeordnet ist und derart gestaltet ist, dass die Kippschutzvorrichtung (8) an zwei oder drei Seiten einen Kippschutz aufweist, wobei in Förderrichtung (F) der Transportvorrichtung (2) kein Kippschutz vorgesehen ist.

3. Entstapler nach Anspruch 2, **dadurch gekennzeichnet, dass** die Kippschutzvorrichtung (8) höhenverstellbar ist.

4. Entstapler nach einem der Ansprüche 2 oder 3, **dadurch gekennzeichnet, dass** die Kippschutzvorrichtung (8) mit ihrer Oberseite zwischen 0,5 mm und 3 mm, vorzugsweise zwischen 1 mm und 2 mm, unterhalb eines Trayrands (13) eines auf der Transportvorrichtung (2) befindlichen Trays (4) angeordnet ist.

5. Entstapler nach einem der Ansprüche 2 bis 4, **dadurch gekennzeichnet, dass** die Kippschutzvorrichtung (8) zwei einander gegenüberliegende Anlagekonturen (9, 10) aufweist.

6. Entstapler nach Anspruch 5, **dadurch gekennzeichnet, dass** die einander gegenüberliegenden Anlagekonturen (9, 10) jeweils zumindest einen parallel zu einer Förderrichtung (F) der Transportvorrichtung (2) ausgerichteten Abschnitt aufweisen.

7. Entstapler nach einem der Ansprüche 2 bis 6, **dadurch gekennzeichnet, dass** die Kippschutzvorrichtung (8) eine quer zur Förderrichtung (F) der Transportvorrichtung (2) ausgerichtete Anlagekontur (11) aufweist.

8. Entstapler nach einem der Ansprüche 2 bis 7, **dadurch gekennzeichnet, dass** die Kippschutzvorrichtung (8) als Blechkonstruktion ausgeführt ist.

9. Entstapler nach einem der Ansprüche 2 bis 8, **dadurch gekennzeichnet, dass** die Kippschutzvorrichtung (8) einteilig ausgeführt ist.

10. Entstapler nach einem der Ansprüche 2 bis 9, **dadurch gekennzeichnet, dass** die Kippschutzvorrichtung (8) wenigstens teilweise U-förmig ausgebildet ist.
